# EUROPEAN PATENT SPECIFICATION

(11) **EP 1 683 845 B1**
(45) Date of publication and mention of the grant of the patent: **21.02.2007**
(21) Application number: 05100394.5
(22) Date of filing: 21.01.2005
(51) Int. Cl.: C09J 123/02

(54) **Aqueous adhesive composition and method of adhering a thermoplastic elastomer to polar substrates**
Wässrige Klebemasse und Verfahren zum Kleben eines thermoplastischen Elastomers auf polaren Trägern
Composition aqueuse adhésive et procédé de fixation d'un élastomère thermoplastique sur des substrats polaires

(43) Date of publication of application: 26.07.2006
(73) Proprietor: Advanced Elastomer Systems, L.P., Akron, OH 44311-1059 (US)
(72) Inventor: Ouhadi, Trazollah, 4020, Liège (BE); van Meesche, Antonius, 30190, Boucoiran et Nozières (FR)
(74) Representative: Weber, Thomas

(56) References cited:
- WO-A-99/02583
- US-A- 3 847 723
- US-A- 4 130 537
- US-A- 5 092 953
- US-A- 5 281 638

## Description

### Field of the Invention

The present invention is directed to an aqueous adhesive composition comprising a functionalized polyolefin, a cross-linking agent, and a cross-linkable resin as well as to a process for adhering a thermoplastic elastomer composition to a substrate comprising the steps of applying said aqueous adhesive composition to a polar substrate and applying the thermoplastic elastomer, for instance by extrusion, in particular, by robotic extrusion.

### Background of the Invention

Robotic extrusion is an innovative technology for the manufacture of shaped parts of thermoplastic polymers, in particular thermoplastic elastomer (TPE). In extrusion processes the cross-sectional profile of an extruded part is predetermined by the die or the combination of die and mandrel of the extruder. In conventional extrusion processes only parts having a linear shape in the longitudinal direction (also referred to as machine direction) are obtainable since the die or the combination of die and mandrel are fixed in a defined and static position relative to the barrel of the extruder. In robotic extrusion the die or the combination of die and mandrel are movable in all dimensions of space in relation to the barrel of the extruder, for instance by means of a robotic handling unit.
Additionally, the die and the mandrel can be movable relative to each other to result in eccentricity in the die passage. By moving the die and the mandrel relative to each other and/or by moving the die relative to the barrel of the extruder shaped parts can be obtained that have a non-linear shape in the longitudinal direction, i.e. shaped parts that have, for instance, wide and acute bends in all dimensions of space.
Thus, parts having complex shapes such as hoses, gaskets and profile seals can be obtained in large numbers without the need of using molds for shaping the parts, the preparation of which is time consuming and costly. Furthermore, robotic extrusion is an excellent processing tool for the extrusion of a soft profile seal around or on a rigid substrate such as glass, metal and hard thermoplastics for instance polypropylene (PP), polycarbonate (PC), acrylonitrile-butadiene-styrene copolymers (ABS), etc.
The most widely used thermoplastic elastomers comprise a polyolefin as thermoplastic polymer. As a consequence, these thermoplastic elastomers adhere only to apolar substrates and they do not adhere, or only with difficulty, to polar substrates. Generally, in order to improve the adhesion, the substrate has to be pretreated, for instance, by applying a primer and/or an adhesive composition to the substrate surface.
Known adhesive compositions are applied as solution in organic solvents. These adhesive compositions suffer from the drawback that hazardous and flammable vapors that are harmful for the personnel and the environment evolve during the application. In fact, in most of industrialized countries the use of adhesive systems based on organic solvents becomes more and more subject to legislative restrictions based on environmental protection.
An alternative type of adhesive compositions that are solid or semi-solid at room temperature is applied to the substrate at elevated temperature in molten form and the thermoplastic elastomer is applied to the adhesive composition either while the adhesive composition is still in the melt or after cooling and re-heating to a melt. These adhesive compositions suffer from the drawback that complex equipment is necessary for providing and handling the molten polymer composition and an adequate adhesion level is generally not obtained with polyolefinic compounds.
A further alternative is represented by polyurethane-based reactive adhesives, however, these systems, which are applied as a mastic at room temperature do not work for a polyolefinic compound.
US Patent 5,051,474 discloses an adhesive compositions for bonding polymeric compositions to metal comprising a first component mixture of a linear polyester polyurethane, a halogenated polyolefin, and a phenolic resin and as the second component a cross-linking compound for cross-linking the first component. The components are stored separately.
US Patent 5,102,937 discloses an adhesive compositions for bonding polymeric compositions to glass comprising a first component mixture of a linear polyester polyurethane, a halogenated polyolefin, and an alkoxy silane compound and as the second component a cross-linking compound for cross-linking the first component. The components are stored separately.
However, these compositions require solvents such as methyl ethyl ketone, methyl isobutyl ketone, xylene and toluene which are flammable and precarious for the hazards associated with their use.
Japanese Patent Application JP-A-55018462 discloses an adhesive composition for bonding polymers to metals. The adhesive composition comprises (A) a chlorinated polypropylene, vinyl chloride copolymers or ethylene-polar vinyl copolymers and (B) polyisocyanates. The composition is applied in the form of a solution in an organic solvent.
Consequently, the development of water-based adhesive systems is highly desired in those branches of industry in which polymers need to be adhered to a substrate.
Good adhesion of a polyolefinic compound to a polar substrate is difficult to achieve even with a solvent based adhesive system and becomes a much more challenging objective with water based adhesive systems due to the lack of affinity between water and polyolefins.
Therefore it has been an object of the present invention to provide adhesive compositions that can be applied without requiring complex equipment and/or that are free of organic solvents and that can easily be handled.
Several aqueous emulsion-/suspension-based adhesives for bonding polyolefinic compounds to a polar substrate are commercially available. However, none of these commercial systems exhibit an acceptable adhesion level when used, for instance, for the encapsulation of glass with polyolefin-based thermoplastic elastomers.

### Summary of the Invention

The present invention is directed to an aqueous adhesive composition comprising a functionalized polyolefin, a cross-linking agent and a cross-linkable resin.
In another aspect, the invention is directed to the use of said aqueous adhesive composition for bonding a shaped thermoplastic elastomer to the surface of a polar substrate.
In a further aspect, the invention is directed to a process for adhering a thermoplastic elastomer to a polar substrate comprising applying said aqueous adhesive composition to the surface of a polar substrate and applying the thermoplastic elastomer to the surface of said substrate, for instance, by extrusion, in particular, by robotic extrusion.

Preferred embodiments will become evident from the detailed description which follows and the appending claims.

Although the appending claims in accordance with U.S. patent practice may have single dependencies, each of the features in any of the appending claims can be combined with each of the features of other appending claims of the independent claim.

### Detailed Description of the Invention

### Aqueous Adhesive Composition

The present invention relates to an aqueous adhesive composition comprising
a) at least one functionalized polyolefin;
b) at least one cross-linkable resin; and
c) at least one cross-linking agent.

### Functionalized Polyolefin

The functionalized polyolefin can be any polyolefin bearing a functional group such as hydroxyl, carboxylic acid, carboxylic anhydride, a primary or secondary amine, halogen like chlorine, bromine etc or epoxy. It is also possible that various of these functional groups are present in one molecule of the functionalized polyolefin. Furthermore, mixtures of different functionalized polyolefins can be used. Likewise, it is possible to use different polyolefins bearing different functional groups.
The functionalized polyolefin can be obtained by either a post grafting reaction generally through a free radical process or by copolymerization of one or several types of olefin monomers with one or several types of monomers bearing the above mentioned functional groups.
Generally, the polyolefin can be selected from a homopolymer polymerized from an olefinically unsaturated monomer having 2 to 4 carbon atoms or a copolymer of ethylene with an alpha-olefin having 3 to 18 carbon atoms. Optionally, a conjugated or a non-conjugated diene can be copolymerized. Examples of these dienes are 5-ethylidene-2-norbornene, 5-vinyl-2-norbornene, 1,4-hexadiene, 1,6-octadiene, 5-methyl-1,4-hexadiene, 3,7-dimethyl-1,6-octadiene, and the like. The polyolefin can contain a vinyl acetate, methacrylate or acrylate as comonomer.
Functionalized hydrogenated or non-hydrogenated vinyl styrene-conjugated diene block copolymer such as SEBS, SEPS, SBS, SIS, SIBS etc. are also considered and can be used as functionalized polyolefins in accordance with this invention, bearing the functional groups mentioned above.
Various aqueous emulsions/suspensions of functionalized polyolefins are commercially available such as Priex 703 from Solvay (Belgium), Sipiol W5808 from Henkel (Germany) and, Trapylene 6800W from Tramaco, Germany.
Optionally, blends of said functionalized polyolefins with polyolefins that do not contain any functional groups can likewise be used.
The amount of functional groups present in the functionalized polyolefin range from about 0.1 to about 20 % by weight, preferably up to about 10 % by weight of the functional group, based on the weight of the functionalized polyolefin.
The amount of functionalized polyolefins in the aqueous adhesive composition is in the range of from about 3 to about 50 % by weight, preferably from about 5 to about 40 % by weight, most preferably from about 10 to about 30 % by weight, based on the total weight of the total aqueous adhesive composition.

### Cross-linking Agent

Generally, the cross-linking agent comprised in the adhesive aqueous emulsion composition according to the present invention is an agent that is capable of reacting with the functional groups of functionalized polyolefin and/or the cross-linkable resin.

In a preferred embodiment, the cross-linking agent comprises an isocyanate cross-linking agent, preferably a blocked isocyanate cross-linking agent. The blocking of the isocyanate function may be needed in order to avoid the reaction of the isocyanate function with the water used as emulsion or suspension matrix for the adhesive compositions in cases in which an acceptable shelf-live of the aqueous adhesive composition is to be achieved. The isocyanate function is released at high temperature such as above 100 °C and, consequently, becomes available to react with the functional group of the functionalized polyolefin and the cross-linkable resin.
Generally, any blocked isocyanate having at least two reactive blocked isocyanate groups can be used in order to react with the hydroxyl groups of the acrylic or epoxy resin or the amino and methylol group of the melamine resin. Representative blocked isocyanates without any limitation, are typically selected from blocked isocyanates based on the following (unblocked) isocyanates such as 1,6-hexamethylene diisocyanate; 1,8-octamethylene diisocyanate; 1,12-dodecamethylene diisocyanate; 2,2,4-trimethylhexamethylene diisocyanate and similar isocyanates; 3,3'-diisocyanatodipropyl ether; 3-isocyanatomethyl-3,5,5'-trimethylcyclohexyl isocyanate; cyclopentylene-1,3-diisocyanate; cyclohexylene-1,4-diisocyanate; methyl 2,6-diisocyanatocaprolate; bis-(2-isocyanatoethyl)-fumarate; 4-methyl-1,3-diisocyanatocyclohexane; trans-vinylene diisocyanate and similar unsaturated polyisocyanates; 4,4'-methylene-bis-(cyclohexylisocyanate) and related polyisocyanates; methane diisocyanates; bis-(2-isocyanatoethyl) carbonate and similar carbonate polyisocyanates; N,N',N"-tris-(6-isocyanatohexamethylene) biuret and related polyisocyanates as well as other known polyisocyanates derived from aliphatic polyamines; toluene diisocyanates; xylene diisocyanates; dianisidine diisocyanate; 4,4'-diphenylmethane diisocyanate; 1-ethoxy-2,4-diisocyanatobenzene; 1-chloro-2,4-diisocyanatobenzene; tris(4-isocyanatophenyl) methane; naphthalene diisocyanates; 4,4'-biphenyl diisocyanate; phenylene diisocyanates; 3,3'-dimethyl-4,4'-biphenyl diisocyanate; p-isocyanatobenzoyl isocyanate and tetrachloro-1,3-phenylene diisocyanate and mixtures thereof.
In a preferred embodiment blocked isocyanates having none or reduced reactivity with water compared to unblocked isocyanate are used as cross-linking agents. Due to the low reactivity of the blocked isocyanates the adhesion promoting compositions of the present invention have significantly increased open times and improved storability. Blocked isocyanates, that are typically used in conjunction with the present invention are based on isophorone diisocyanate (3-isocyanatomethyl-3,5,5-trimethylcyclohexyl isocyanate), supplied by Degussa under the trade designations Vestanat® IPDI and Vestanat® T 1890/100, or caprolactam-blocked diisocyanates, such as of 4,4'-diphenylmethane diisocyanate (available as 50% dispersion in water from EMS Chemie under the trade designations Grilbond® IL 6 50%).
As mentioned above, an unblocked isocyanate cross-linking agent could be used in certain instances when the final adhesive emulsion or suspension is used immediately after mixing.
In another preferred embodiment, the cross-linking agent is an aziridine cross-linker.
A typical example for use in this invention is represented by polyfunctional aziridines. Examples of suitable polyfunctional aziridines include those disclosed in U.S. Patent 3,225,013. In one embodiment, the polyfunctional aziridine is a trifunctional aziridine. Particular examples are trimethylol propane tris[3-aziridinyl propionate]; trimethylol propane tris[3(2-methyl-aziridinyl)-propionate]; trimethylol propane tris[2-aziridinyl butyrate]; tris(1-aziridinyl) phosphine oxide; tris(2-methyl-1-aziridinyl) phosphine oxide; pentaerythritol tris-3-(1-aziridinyl propionate); and pentaerythritol tetrakis-3-(1-aziridinyl propionate). Commercially available polyfunctional aziridines include those available under the trade designations "XAMA-2" (trimethylolpropane-tris-(beta-(N-aziridinyl)propionate)) and "XAMA-7" (pentaerythritol-tris-(beta-(N-aziridinyl)propionate)) from Ichemco, Italy, and "NeoCryl CX-100" from Zeneca Resins.

According to the invention, the adhesive composition typically comprises the cross-linking agent in an amount of from about 1 % by weight to about 20 % by weight, preferably from about 2 % by weight to about 15 % by weight, most preferably from about 3 % by weight to about 10 % by weight, based upon the total weight of the total aqueous adhesive emulsion composition comprising the functionalized polyolefin, the cross-linkable resin and the cross-linking agent.

### Cross-linkable Resin

A further component of the adhesive aqueous emulsion composition according to the present invention is represented by the cross-linkable resin. Cross-linkable resins are polymeric compounds having functional groups which could react with the cross-linking agent, i.e. with a blocked isocyanate group in the case of an isocyanate-based cross-linking agent or with an aziridine group in the case of an aziridine cross-linker. Alternatively, these resins may cross-link among themselves.
The cross-linkable resin may be represented by compounds obtainable by reaction of melamines, urea, benzoguanamine, glycoluril or mixtures thereof with formaldehyde. Moreover, epoxy- and/or acrylic resins can be used as the cross-linkable resins according to the present invention. In a preferred embodiment, due to the cross-linkable amino groups, melamine resins are used as cross-linkable resins. Preferred melamine resins are selected from the group consisting of hexamethoxymethylmelamine resins, high solids methylated melamine resins, high solids mixed ether melamine resins and butylated melamine resins, wherein hexamethoxymethylmelamine (HMMMA) resins are highly preferred. HMMMA resins do cross-link among themselves under acidic conditions. An acidic environment can be available from the carboxylic group of said functionalized polyolefins or upon addition of an acidic catalyst. High solids" means that the solid content is generally above about 70 to 98 wt.-%, based on organic volatile measurements. From the group of melamine resins the HMMMA resins are preferred as good adhesion even after ageing under high temperature and high humidity storage conditions. Said cross-linkable resins are commercially available, for instance, from UCB, Belgium, under the trade designation Resimene® or from CYTEC under the trade designation Cymel® . In a preferred embodiment hexamethoxymethylmelamine resins based on Resimene® 745 and Resimene® 3521 are used.
As an alternative embodiment of the present invention acrylic resins having cross-linkable groups may be used as the cross-linkable resin. Among these, acrylic resins with a hydroxyl group are preferred. Acrylic resins that can be used according to the present invention are available by polymerizing monomers which contain a vinyl group and which may be described as resinous polymers of esters of alpha,beta-ethylenically unsaturated monocarboxylic acids and saturated aliphatic alcohols containing from 1 to about 10 carbon atoms. Thus, the monomers from which these esters are obtained may be represented by the following general formula II 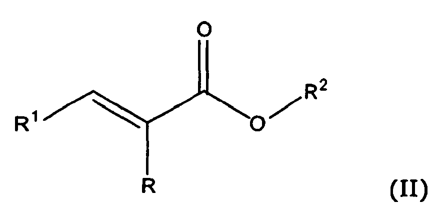 wherein R and R¹ independently represent hydrogen or alkyl groups, such as straight or branched chain alkyl groups having up to 10 carbon atoms. Preferred for R and R¹ is the methyl group. R² represents a straight or branched alkyl group having up to 10 carbon atoms. Under polymerization conditions these acrylate monomers form resinous polyacrylates. Suitable acrylic resins are disclosed in United States Patent 3,919,153, the disclosure of which is fully incorporated herein by reference.
In conjunction with the present invention acrylic resins having a cross-linkable hydroxyl group are especially preferred. Such acrylates are commercially available from SOLUTIA under the trade designation Macrynal® SM540/60X or under the trade name Lumitol® from BASF. Compared to the melamine resins the use of acrylic resins leads to adhesion promoting compositions which are more moisture sensitive.

In a further alternative embodiment of the present invention, epoxy resins having cross-linkable groups may be used as the cross-linkable resins. Epoxy resins are prepolymers that contain on the average two or more epoxide groups per molecule. Their reaction with a variety of curing agents, for instance, with diols, such as bisphenol A leads to cross-linked or thermoset plastics with excellent strength, toughness and chemical resistance. Suitable epoxy resins are known from the prior art and are commercially available. For instance, D.E.R.², D.E.N.², Tactix², Quartex² supplied by The Dow Chemical Company; Epon², Epikote², Eponol², Eponex² supplied by Shell; Araldite², Aracast® supplied by Ciba Geigy; Epi-Rz² supplied by Celanese, Epotuf² supplied by Reichold or Unox² supplied by Union Carbide, Neukadur², Biresin² and Ebalta LM² can be used. In a preferred embodiment of the present invention Araldite² GT6097CH supplied by Ciba Geigy, aliphatic trifunctional glycidyl, aliphatic difunctional glycidyl ether supplied by EMS, is used.
Typically, the aqueous adhesive composition according to the present invention comprises from about 0.5 % by weight to about 20 % by weight, preferably from about 1 % by weight to about 15 % by weight, most preferably from about 2 % by weight to about 10 % by weight of the cross-linkable resin, based upon the total weight of total aqueous adhesive composition comprising the functionalized polyolefin, cross-linkable resin and cross-linking agent.

### Thermoplastic Elastomer

The thermoplastic elastomer to be adhered to the substrate using the aqueous adhesive composition of the present invention has a combination of both thermoplastic and elastomeric properties. It is characterized by the simultaneous presence of regions that tend to form amorphous domains and regions that tend to form more crystalline domains or, in other terms, domains having a glass transition temperature (Tg) of 70 °C or higher in the polymer bulk. The amorphous domains provide the polymer with elastomeric (rubbery) properties while the more crystalline domains provide the polymer with thermoplastic properties.
The simultaneous presence of amorphous domains and domains having a high Tg can be accomplished by block-copolymerizing two or more different monomers, at least one of which would tend to form an amorphous, rubbery polymer, if homo-polymerized. This can be exemplified on styrene-butadiene-styrene block copolymer. Styrene tends to form domains having a Tg of 70 °C or more, i.e., thermoplastic blocks, while butadiene tends to form amorphous rubbery blocks. A further typical example is styrene-ethylene-butene-styrene block copolymer (SEBS).

Another type of thermoplastic elastomers is represented by thermoplastic vulcanizates, although the terms 'thermoplastic elastomers' and 'thermoplastic vulcanizates' are often used interchangeably in the art.

The term 'thermoplastic vulcanizate' as used herein means a mixture comprising small particles of cross-linked rubber well dispersed in a polyolefinic thermoplastic, such as a polypropylene homo- and/or copolymer or random or block-copolymer with the comonomer being ethylene or a polyethylene homo-and/or copolymer with the comonomer being selected from C₃ to C₁₈ mono-olefins, preferably C₃ to C₈ mono-olefins. Thermoplastic vulcanizates are usually obtained by dynamic vulcanization. The term 'thermoplastic vulcanizate' indicates that the rubber phase is at least partially vulcanized (cross-linked).

The terms 'cross-linked' and 'vulcanized', 'cross-linking' and 'vulcanization' and 'vulcanize' and 'cross-link' are used interchangeably in conjunction with this invention.

Likewise, the term 'thermoplastic vulcanizate composition' is used interchangeably with the term 'thermoplastic vulcanizate'.

The terms 'rubber' and 'elastomer' are used interchangeably in terms of this application and refer to polymers having elastomeric properties and being curable.

The term 'blend' refers to a mixture of the polypropylene homo- and/or copolymer or the polyethylene homo and/or copolymer and the non-vulcanized rubber.

In context with the dynamically vulcanized rubber component of the thermoplastic vulcanizates used in this invention the term 'fully vulcanized' denotes that the rubber component has been cured to a state in which the physical properties of the rubber are developed to impart elastomeric properties to the rubber generally associated with the rubber in its conventional vulcanized state. The degree of cure of the vulcanized rubber can be described in terms of gel content or, conversely, extractable components. Alternatively, the degree of cure can be expressed in terms of cross-link density.

In general, the less extractables the cured rubber component contains, the better the properties are. Therefore, it is preferable that the compositions comprise a cured rubber phase from which essentially no rubber can be extracted. The term 'essentially no extractable rubber' means that about 5 wt% or less of the rubber that is capable of being cured can be extracted.

The percent of soluble rubber in the cured composition is determined by refluxing a thin film specimen in boiling xylene for 2 hours, weighing the dried residue and making suitable corrections for soluble and insoluble components based upon knowledge of the composition. Thus, corrected initial and final weights are obtained by subtracting from the initial weight, the weight of soluble components, other than the rubber to be vulcanized, such as extender oils, plasticizers and components of the compositions soluble in organic solvent, as well as that rubber component of the thermoplastic elastomer which it is not intended to cure. Any insoluble pigments, fillers, etc., are subtracted from both the initial and final weights.

To employ cross-link density as the measure of the state of cure which characterizes the thermoplastic vulcanizate compositions, the blends are vulcanized to the extent which corresponds to vulcanizing the same rubber as in the blend statically cured under pressure in a mold with such amounts of the same curatives as in the blend and under such conditions of time and temperature to give an effective cross-link density greater than about 3·10⁻⁵ moles per milliliter of rubber and preferably greater than about 5·10⁻⁵ or even more preferably about 1·10⁻⁴ moles per milliliter of rubber. The blend is then dynamically vulcanized under similar conditions with the same amount of curative based on the rubber content of the blend as was required for the rubber alone. The cross-link density so determined may be regarded as a measure of the amount of vulcanization which gives the improved thermoplastics.

The cross-link density of the rubber is determined by equilibrium solvent swelling using the Flory-Rehner equation as disclosed in J. Rubber Chem. and Tech. 30, page 929, the disclosure of which is fully incorporated herein. The appropriate Huggins solubility parameters for rubber-solvent pairs used in the calculation were obtained from the review article by Sheehan and Bisio, J. Rubber Chem. & Tech., 39, 149, the disclosure of which is fully incorporated herein. If the extracted gel content of the vulcanized rubber is low, it is necessary to use the correction of Bueche wherein the term 'v' is multiplied by the gel fraction (% gel/100). The cross-link density is half the effective network chain density 'v' determined in the absence of resin. The cross-link density of the vulcanized blends should therefore be understood to refer to the value determined on the same rubber as in the blend in the manner described. Still more preferred compositions meet both of the afore-described measures of state of cure, namely, by estimation of cross-link density and percent of rubber extractable.

The terms 'fully vulcanized', 'fully cured' or 'fully cross-linked' as used in the description and claims mean that the rubber component to be vulcanized has been cured or cross-linked to a state in which the elastomeric properties of the cross-linked rubber are similar to those of the rubber in its conventional vulcanized state, apart from the thermoplastic elastomer composition. The rubber component can be described as fully cured when about 5 % or less, preferably about 4 % or less, more preferably about 3 % or less, and most preferably about 2 % or less, of the rubber which is capable of being cured is extractable from the thermoplastic elastomer product by refluxing xylene.

The terms 'partially vulcanized', 'partially cured' or 'partially cross-linked' as used in the description and the claims mean that the rubber component to be vulcanized has been cured or cross-linked to a state so that more than 5 % by weight of the rubber which is capable of being cured is extractable from the thermoplastic elastomer product in boiling xylene, e.g. more than 5 % by weight and up to 50 % by weight, preferably more than 5 % by weight and up to 30 % by weight, most preferably more than 5 % by weight and up to 15 % by weight.

### Rubber

The rubber may be a polyolefin rubber which, because of the random nature of its repeat structure or side groups, does not tend to crystallize. However, it is prerequisite that the rubber can be vulcanized by the systems set forth herein below. Examples of other rubbers useful here include butyl rubber, halobutyl rubber, halogenated (e.g. brominated) copolymers of p-alkylstyrene and an isoolefin of from 4 to 7 carbon atoms (e.g., isobutylene), natural rubber, homo-and copolymers of at least one conjugated diene monomer like isoprene, butadiene, or combinations thereof. Styrene-conjugated diene copolymers like styrene-butadiene-styrene copolymers, styrene-isoprene-styrene copolymers and their hydrogenated version like SEBS, SEPS etc. Another family of rubbers are styrene-butadiene copolymers called commonly SBR .
Another family of rubbers are ethylene-alpha olefin with 4 to 10 carbon atoms that are manufactured using single site or metallocene catalyst systems with or without long chain branching and having a density of 0.900 gram / cm³ or below.

Desirably, the rubber is an olefin rubber such as EPDM-type rubber. EPDM-type rubbers are generally terpolymers derived from the polymerization of at least two different monoolefin monomers having from about 2 to about 10 carbon atoms, preferably from about 2 to about 4 carbon atoms, and at least one polyunsaturated olefin having from about 5 to about 20 carbon atoms. Said mono-olefins desirably have the formula CH₂=CH-R in which R represents H or an alkyl containing about 1 to about 12 carbon atoms. Ethylene and propylene are preferred. Desirably the repeat units from at least two mono-olefins (and preferably from ethylene and propylene) are present in the polymer in weight ratios of about 25 : 75 to about 75 : 25 (ethylene : propylene) and constitute from about 90 to about 99.6 weight percent of the polymer. The polyunsaturated olefin can be selected from straight chained, branched, cyclic, bridged ring bicyclic compounds, fused ring bicyclic compounds, and the like and preferably is a non-conjugated diene. Typical examples are 5-ethylidene-2-norbornene, 5-vinyl-2-norbornene, 1,4-hexadiene, 1,6-octadiene, 5-methyl-1,4-hexadiene, 3,7-dimethyl-1,6-octadiene, and the like. Desirably the amount of repeat units from the non-conjugated polyunsaturated olefin is from about 0.4 to about 10 weight percent of the rubber, based on the amount of the rubber.

### Process for Preparing the Thermoplastic Vulcanizates

The thermoplastic vulcanizates used for this invention are prepared by using dynamic vulcanization techniques. Dynamic vulcanization is a process in which at least one rubber is cross-linked within a blend that includes the rubber and at least one non-vulcanizing polymer, i.e., thermoplastic polymer, while both polymers are undergoing mixing or masticating at some elevated temperature; the mixing or masticating continues until a desired vulcanization is achieved. Thermoplastic vulcanizates and processes for preparing them are well known in the art, see for instance, US patents 4,130,535, 4,311,628, 4,594,390, and 5,672,660, and "Dynamically Vulcanized Thermoplastic Elastomers", S. Abdou-Sabet et al., Rubber Chemistry and Technology, Vol. 69, No. 3, July-August 1996, and references cited therein.
More specifically, the thermoplastic polyolefin as defined above, the uncured rubber, and, the optional, additives are melt-mixed in a mixer heated to above the melting temperature of the thermoplastic polyolefin. The optional additives as well as part of the thermoplastic component can be added at this stage or later (e.g. by means of a side feeder if an extruder is used). After sufficient molten-state mixing to form a well mixed blend, an efficient amount of a vulcanizing system is generally added. In some embodiments it is preferred to add the vulcanizing system in solution with a liquid, for example, a rubber processing oil, or in a solid master-batch which is compatible with the other components, for instance, polypropylene master-batch pellets previously compounded with the vulcanizing system.

The rubber processing oil can be split and can be added at various stages of processing, including after the curing of the rubber phase.

It is convenient to follow the progress of vulcanization by monitoring mixing torque or mixing energy requirements during mixing. The mixing torque or mixing energy curve generally goes through a maximum after which mixing can be continued somewhat longer to improve the production of the blend. If desired, one can add some of the ingredients after the dynamic vulcanization is complete.

If fillers are added, it is usually desirable to allow the fillers and a portion of any plasticizer to distribute within the rubber or in the thermoplastic phase before the rubber phase is vulcanized. Vulcanization of the rubber can occur in a few minutes or less depending on the mix temperature, shear rate, and activators present for the curative. Suitable curing temperatures include from about 140 °C or from about 150 °C to about 260 °C, more preferred temperatures are from about 150 °C or from about 170 °C to about 225 °C or to about 240 °C. The mixing equipment can include Banbury™ mixers, Brabender™ mixers, and certain mixing extruders such as co-rotating, counter-rotating, and twin-screw extruders, as well as co-kneaders, such as Buss® kneaders.

After discharging from the mixer the blend containing the vulcanized rubber and the thermoplastic can be milled, chopped, extruded, pelletized, injection-molded, or processed by any other desirable technique.

### Additives

Depending on the desired end-use, the thermoplastic vulcanizate can include a variety of additives in an amount sufficient to bring about the desired effect. The additives include particulate fillers such as carbon black, silica, titanium dioxide, colored pigments, clay, zinc oxide, stearic acid, stabilizers, antidegradants, UV-stabilizers, flame retardants, processing aids, adhesives, tackifiers, plasticizers, waxes, discontinuous fibers (such as synthetic and/or natural fibers) and extender oils.
If extender oil is used it can be present in amounts of from about 5 to about 300 parts by weight per 100 parts by weight of the blend of very low density polyethylene copolymer and rubber. The amount of extender oil (e. g., hydrocarbon oils and ester plasticizers) is preferably in the range of from about 30 to about 250 parts, and more desirably of from about 70 to about 200 parts by weight per 100 parts by weight of said blend of very low density polyethylene copolymer and rubber. If non-black fillers are used, it is desirable to include a coupling agent to compatibilize the interface between the non-black fillers and polymers. Desirable amounts of carbon black, if present, are from about 5 to about 250 parts by weight per 100 parts by weight of said blend of very low density polyethylene copolymer and rubber.

The final aqueous adhesive composition may contain typical amounts of conventional surfactants in order to provide for stable emulsion or suspension systems. Suitable surfactants are known to the skilled person and they may in fact already be contained in the commercially available aqueous functionalized polyolefin compositions.

### Process

According to the present invention the process for adhering a thermoplastic elastomer to a substrate comprises the steps of
(i) applying the aqueous adhesive composition according to any of claims 1 to 6 to a polar substrate, and
(ii) applying the thermoplastic elastomer to the surface of said substrate, for instance, by extrusion, injection-molding, blow-molding, or laminating.

In a preferred embodiment the substrate surface is pretreated with a primer.
In another preferred embodiment the thermoplastic elastomer is applied by robotic extrusion.
It is essential for accomplishing adhesion to evaporate the water contained in the aqueous adhesive composition prior to applying the thermoplastic elastomer by exposing the treated substrate surface to either hot air or infrared irradiation, etc., for a time and at a temperature sufficient to quickly evaporate the water. The temperature is decided by the respective substrate material and the process speed and it can routinely be determined by the skilled person. In order to accomplish evaporation in a time acceptably short with respect to the desired short cycle time for a fully automated process, the aqueous adhesive composition is advantageously applied to the substrate in order to provide for a final thickness of the solid layer of less than about 60 µm, preferably less than about 30 µm, more preferably less than about 20 µm, most preferably less than about 10 µm. The minimum thickness is defined by the minimum adhesion required for the respective purpose.

Typically, the adhesive layer on the substrate is preferably heated prior to application of the thermoplastic elastomer such that immediately prior to the application of the thermoplastic elastomer the substrate surface has a temperature of from about 220 °C to about 70 °C, preferably from about 190 °C to about 80 °C, more preferably from about 170 °C to about 90 °C, most preferably from about 150°C to about 100 °C.

### Primer

A surface treatment with a primer prior to applying the aqueous adhesive composition is recommended in some cases such as glass surfaces with or without ceramic coating and metal surfaces. By such a treatment the adhesion can be enhanced. The primers that can be used in conjunction with the aqueous adhesive composition of the present invention have to be capable of interacting with both the surface of the polar substrate and the functional groups of the isocyanate cross-linker and/or with the cross-linkable resin and/or the functional groups of the functionalized polyolefin.
In a preferred embodiment of the present invention the primer is a silane primer that is selected from the group consisting of epoxy-silanes of formula (III), mercapto-silanes of formula (IV) and amino-silanes of formula (V) as shown herein below: 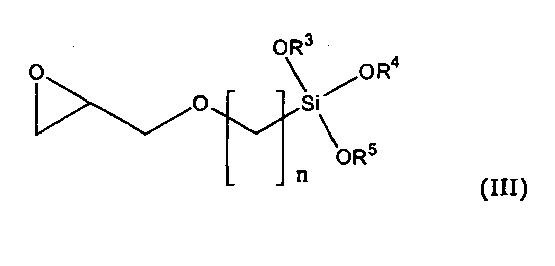 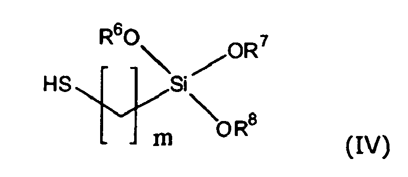 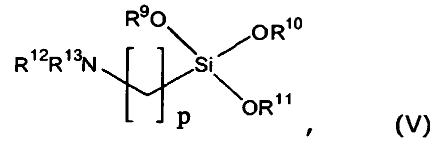 wherein n, m and p are integers from 1 to 12, preferably 2 to 8, more preferably 3 to 5 and the substituents R³ to R¹¹ are each individually selected from linear and branched alkyl groups having from 1 to 12, preferably from 2 to 8, most preferably 3 to 4 carbon atoms and substituents R¹² and R¹³ are independently selected from hydrogen and linear and branched alkyl groups having from 1 to 12, preferably from 2 to 8, most preferably 3 to 4 carbon atoms, preferably R¹² and R¹³ are both hydrogen.
In a more preferred embodiment of the invention the primer is a compound selected from the group consisting of 3-aminopropyl-triethoxysilane and 3-mercaptopropyl-triethoxysilane which are supplied by Sivento under the trade names Dynasylan® 3201, Dynasylan® AMEO. A further silane primer is 3-glycidyloxypropyl-trimethoxysilane commercially available from Sivento under the trade designation Dynasylan® GLYMO. Additionally, suitable silane primers are commercially available from DOW Chemical under the trade designation Betawipe VP® 046404, from SIKA under the trade designation Sika® -Activator and from Teroson under the designation Terostat® -8540. Typically, the silane primers may be dissolved in suitable solvents such as alcohols, for instance, isopropanol.
A thin layer of the silane primer can be applied to the substrate surface to be adhered to the thermoplastic elastomer. In order to facilitate the thin coating of the substrate the primer is usually dissolved in a suitable solvent, such as methanol, ethanol or isopropanol to give an about 1 to 5 wt.-% solution. That solution is then applied to the substrate surface as thinly as possible by spraying, brushing or wiping. In a preferred embodiment of the invention wipe on/wipe off techniques are used, wherein the applied film is wiped off immediately after its application. Prior to application of the primer the substrate surface should be cleaned and degreased in different ways, for instance, using hexane or other systems like a hot aqueous soap solution, aqueous ammonia solution or other systems.
Typically, the wet coating thickness of the primer is in the range of from about 0.3 µm to about 5 µm, preferably from about 0.5 µm to about 3 µm, most preferably from about 0.8 µm to about 2 µm.
In an alternative embodiment of the invention the silane primer can be admixed with the aqueous adhesive composition of the invention. In this embodiment the application of the primer to the substrate surface occurs simultaneously with the aqueous adhesive composition and, as a consequence, a separate coating step is rendered redundant.
The silane primer may be present in said solution in an amount of from about 0.1 wt.-% to about 5 wt.-%, preferably from about 0.5 wt.-% to 2.5 wt.-%, most preferably from about 0.7 wt.-% and 1.2 wt.-%, based on the total weight of the solution.
Substrate surface cleaning mentioned above is highly recommended in all cases with or without the use of a primer.

### Polar Substrate

The polar substrate on which the thermoplastic elastomer is to be applied is selected from glass, ceramic, textiles, wood, metal and polar engineering thermoplastic resins. Glass, ceramic and metal surfaces are advantageously pretreated using a primer. Typical examples of polar engineering thermoplastic resins are selected from polyethylene terephthalate (PET), polybutylene terephthalate (PBT), polyamide (PA), polycarbonate (PC), thermoplastic polyurethane (TPU), etc.

### Robotic Extrusion

The term 'robotic extrusion' as used in the description and claims refers to the method of and an apparatus for equipping the surface of an article with a profile gasket or seal, bead or a profiled frame, after an appropriate pre-treatment of the article surface, if necessary. A thermoplastic elastomer is supplied by means of an extruder and a heated pressure hose to a heated extrusion nozzle. The nozzle is guided by a robot, and the elastomer is extruded and laid by means of the extrusion nozzle onto the substrate surface. By this method, for instance, a gasket can be applied to an automobile glazing as profiled frame along the border of the glazing.
The apparatus can comprise an arrangement combining a die and a robotic handling/operating unit as described in United States Patent 5,336,349 to Cornils, the content of which is fully incorporated herein by reference. This arrangement avoids sterical interaction of the extrudate with the extrusion nozzle and does not necessitate a mold.
Advantageously, if the article to be prepared is hollow in the machine direction, such as a hose, and has a bended shape, the extrusion nozzle comprises a mandrel and a die at least one of which can be offset to result in excentricity in the annular die passage.

The present invention provides an aqueous adhesive composition that utilizes water as the solvent and avoids hazardous organic solvents. Furthermore, the level of adhesion is increased in comparison to known aqueous adhesive compositions, as is evident from the Examples and Comparative Examples below.

While the present invention has been described and illustrated by reference to particular embodiments, those of ordinary skill in the art will appreciate that the invention lends itself to many different variations not illustrated herein. For these reasons, then, reference should be made solely to the appended claims for purpose of determining the true scope of the present invention.

### Examples

The adhesion force between the polar substrate and the thermoplastic elastomer has been determined by the Peel test according to ASTM D429B and DIN 53531. In a first step the substrate surfaces have been cleaned with pure acetone and coated with a thin layer of Betawipe® VP 04604 using a felt. After having dried the primer coating the aqueous adhesive composition as described in the Table below were applied to the surface using a soft polyethylene foam sponge. After having completely dried the aqueous adhesive composition Santoprene® 121-50E500 (Advanced Elastomer Systems, Akron, USA) was coated onto the surface by robotic extrusion. The test samples were then stored for 48 hours at 23 °C. Then the initial peel test (H-0) was performed on one series of samples at room temperature. Thereafter the Cataplasm Aging Test was carried out on a different series of samples by wrapping bonded specimen in a clean cellulose paper so that the edges are covered. The wrapped specimen was then put in a 1 liter polyethylene bag one third thereof being filled with demineralized water (the specimen must not have direct contact with the water). After a 7 days storage at 70 °C (H-7) the test specimen were removed from the plastic bags and cooled to room temperature and kept there for 24 hours. Thereafter, peel tests as described above were performed. In case of a cohesive rupture the tear occurs within the thermoplastic elastomer whereas in case of adhesive rupture the thermoplastic elastomer detaches from the substrate surface with the thermoplastic elastomer staying intact. The following Table summarizes the results obtained:
Peeling is tested at an angle of 90 degree and with a pulling speed of 100 mm/minute.

**Table**

| Material | Comparative Example 1 | Comparative Example 2 | Example 1 | Example 2 | Example 3 |
|---|---|---|---|---|---|
| Sipiol W8508 | 100 | | 100 | 100 | |
| Priex 703 | | 100 | | | 100 |
| NeoCryl CX 100 | | | 4 | 4 | |
| Grilbond IL6 | | | | | 4 |
| HMMMA ^{$}) | | | 2.5 | 5 | 4 |
| Peel after H-0 ageing at 23 °C | 2 - 3 | 5 | 1 | 1 | 1 |
| Peel after H-7 cataplasm aging | n.a.⁺) | n.a.⁺) | 1 | 1*) | 1 |

| | | | | | |
|---|---|---|---|---|---|
| ⁺) not tested | | | | | |
| *) on ceramic coated surface | | | | | |
| ^{$}) hexamethoxymethylmelamine resin, available as Resimene® 3521 | | | | | |

Sipiol W8508 (Henkel): aqueous emulsion with 16 % by weight of chlorinated polypropylene wax
Priex 703 (Solvay): aqueous emulsion of 28 % by weight maleated polypropylene, 7 % by weight of surfactant and 65 % by weight of water
NeoCryl CX 100 (Zeneca Resins): aziridine cross-linker
Grilbond IL6 (EMS Chemie): caprolactam-blocked 4,4'-diphenylmethane diisocyanate

### Rating:

1 ≥ 95 % cohesive rupture
2 ≥ 75 % cohesive rupture
3 ≥ 50 % cohesive rupture
4 ≥ 25 % cohesive rupture
5 no cohesion

All adhesion data are on glass except for Example 2 where adhesion was measured on glass coated with ceramic.

## Claims

1. An aqueous adhesive composition comprising
a) at least one functionalized polyolefin;
b) at least one cross-linkable resin; and
c) at least one cross-linking agent,
wherein the cross-linkable resin is selected from epoxy- and/or acrylic resins and resins that are obtainable by reaction of melamines, urea benzoguanamine, glycoluril or mixtures thereof with formaldehyde.

2. The aqueous adhesive composition of claim 1 being selected from the group consisting of emulsions or suspensions.

3. The aqueous adhesive composition according to any of claims 1 or 2, wherein the functionalized polyolefin is represented by a polyolefin containing at least one functional group selected from hydroxyl, carboxylic acid, carboxylic anhydride, primary or secondary amine, halogen, epoxy, and combinations of these groups.

4. The aqueous adhesive composition according to any of claims 1 to 3, wherein the cross-linking agent is selected from the group consisting of aziridine cross-linkers or isocyanate-based cross-linkers.

5. The aqueous adhesive composition according to any of claims 1 to 4, wherein the cross-linking agent is a caprolactam-blocked isocyanate cross-linker.

6. Use of an aqueous adhesive composition comprising
a) at least one functionalized polyolefin,
b) at least one cross-linkable resin, and
c) at least one cross-linking agent
for bonding a shaped thermoplastic elastomer to the surface of a polar substrate wherein the cross-linkable resin is selected from epoxy- and/or acrylic resins and resins that are obtainable by reaction of melamines, urea benzoguanamine, glycoluril or mixtures thereof with formaldehyde.

7. The use according to claim 6, wherein the surface of the polar substrate is pretreated with a primer prior to applying the aqueous adhesive composition.

8. A process for adhering a thermoplastic elastomer to a polar substrate comprising
(i) applying the aqueous adhesive composition as defined in any of claims 1 to 5 to said polar substrate, and
(ii) applying the thermoplastic elastomer to the surface of said treated polar substrate.

9. The process according to claim 8, wherein the thermoplastic elastomer is applied to the substrate surface by injection-molding, blow-molding, laminating or extrusion, preferably by robotic extrusion.

10. The process according to any of claims 8 or 9, wherein the polar substrate is selected from the group consisting of polar thermoplastic engineering resins, metals, wood, textiles, ceramics and glass.

11. The process according to any of claims 9 to 10, wherein the surface of the polar substrate is treated with a primer prior to applying the aqueous adhesive composition.

12. The process according to any of claims 8 to 11, wherein the polar thermoplastic engineering resin is selected from the group consisting of polycarbonates, acrylonitrile-butadiene-styrene copolymers, polyamides and polyesters.

13. The process according to claim 11, wherein the primer applied to said metal, ceramic coated glass or said glass surface is selected from the group consisting of amino silanes, mercapto silanes, epoxy silanes and combinations thereof.

14. The process according to any of claims 8 to 13, wherein the thermoplastic elastomer is selected from the group consisting of styrene-ethylenebutylene-styrene block copolymers, styrene-butylene-styrene block copolymers, thermoplastic vulcanizates, and combinations thereof.

15. The process according to claim 14, wherein the thermoplastic vulcanizate is obtainable by dynamically vulcanizing a cross-linkable rubber in the presence of a thermoplastic polyolefin.

16. The process according to claim 15, wherein the thermoplastic polyolefin is selected from polypropylene homo- and/or copolymers, random or blockcopolymers, polyethylene homo- and/or copolymers.

17. The process according to any of claims 9 to 16, wherein the aqueous adhesive composition after application to the substrate surface and evaporation of the water has a thickness of from 1 to 60 µm.

18. An article obtainable by the process of any of claims 8 to 17.

## Patentansprüche

1. Wässrige Klebstoffzusammensetzung, umfassend
a) wenigstens ein funktionalisiertes Polyolefin,
b) wenigstens ein vernetzbares Harz und
c) wenigstens ein Vernetzungsmittel,
wobei das vernetzbare Harz aus Epoxy- und/oder Acrylharzen und Harzen, die durch eine Umsetzung von Melaminen, Harnstoff, Benzoguanamin, Glycoluril oder Mischungen davon mit Formaldehyd erhältlich sind.

2. Wässrige Klebstoffzusammensetzung nach Anspruch 1, ausgewählt aus der aus Emulsionen oder Suspensionen bestehenden Gruppe.

3. Wässrige Klebstoffzusammensetzung nach einem der Ansprüche 1 oder 2, wobei das funktionalisierte Polyolefin durch ein Polyolefin, das wenigstens eine funktionelle Gruppe enthält, die aus Hydroxyl, einer Carbonsäure, einem Carbonsäureanhydrid, einem primären oder sekundären Amin, einem Halogen, einem Epoxy und Kombinationen dieser Gruppen ausgewählt ist, veranschaulicht wird.

4. Wässrige Klebstoffzusammensetzung nach einem der Ansprüche 1 bis 3, wobei das Vernetzungsmittel aus der aus Aziridin-Vernetzungsmitteln oder Vernetzungsmitteln auf der Grundlage von Isocyanat bestehenden Gruppe ausgewählt ist.

5. Wässrige Klebstoffzusammensetzung nach einem der Ansprüche 1 bis 4, wobei das Vernetzungsmittel ein mit Caprolactam geblocktes Isocyanat-Vernetzungsmittel ist.

6. Verwendung einer wässrigen Klebstoffzusammensetzung, umfassend
a) wenigstens ein funktionalisiertes Polyolefin,
b) wenigstens ein vernetzbares Harz und
c) wenigstens ein Vernetzungsmittel
zum Kleben eines geformten thermoplastischen Elastomers an die Oberfläche eines polaren Substrats, wobei das vernetzbare Harz aus Epoxy- und/oder Acrylharzen und Harzen, die durch die Umsetzung von Melaminen, Harnstoff, Benzoguanamin, Glycoluril oder Mischungen davon mit Formaldehyd erhältlich sind, ausgewählt ist.

7. Verwendung nach Anspruch 6, wobei die Oberfläche des polaren Substrats vor dem Auftragen der wässrigen Klebstoffzusammensetzung mit einer Grundierung vorbehandelt wird.

8. Verfahren zum Kleben eines thermoplastischen Elastomers an ein polares Substrat, umfassend
(i) das Auftragen der in einem der Ansprüche 1 bis 5 definierten wässrigen Klebstoffzusammensetzung auf das polare Substrat und
(ii) das Auftragen des thermoplastischen Elastomers auf die Oberfläche des behandelten polaren Substrats.

9. Verfahren nach Anspruch 8, wobei das thermoplastische Elastomer durch Spritzgießen, Blasformen, Laminieren oder Extrudieren, vorzugsweise durch robotergestütztes Extrudieren, auf die Substratoberfläche aufgetragen wird.

10. Verfahren nach einem der Ansprüche 8 oder 9, wobei das polare Substrat aus der aus polaren thermoplastischen Konstruktionsharzen, Metallen, Holz, Textilien, Keramik und Glas bestehenden Gruppe ausgewählt ist.

11. Verfahren nach einem der Ansprüche 9 bis 10, wobei die Oberfläche des polaren Substrats vor dem Auftragen der wässrigen Klebstoffzusammensetzung mit einer Grundierung behandelt wird.

12. Verfahren nach einem der Ansprüche 8 bis 11, wobei das polare thermoplastische Konstruktionsharz aus der aus Polycarbonaten, Acrylnitril-Butadien-Styrol-Copolymeren, Polyamiden und Polyestern bestehenden Gruppe ausgewählt ist.

13. Verfahren nach Anspruch 11, wobei die Grundierung, die auf das Metall, das keramikbeschichtete Glas oder die Glasoberfläche aufgetragen wird, aus der aus Aminosilanen, Mercaptosilanen, Epoxysilanen und Kombinationen davon bestehenden Gruppe ausgewählt ist.

14. Verfahren nach einem der Ansprüche 8 bis 13, wobei das thermoplastische Elastomer aus der aus Styrol-Ethylen-Butylen-Styrol-Block-Copolymeren, Styrol-Butylen-Styrol-Block-Copolymeren, thermoplastischen Vulkanisaten und Kombinationen davon bestehenden Gruppe ausgewählt ist.

15. Verfahren nach Anspruch 14, wobei das thermoplastische Vulkanisat durch ein dynamisches Vulkanisieren eines vernetzbaren Kautschuks in Gegenwart eines thermoplastischen Polyolefins erhältlich ist.

16. Verfahren nach Anspruch 15, wobei das thermoplastische Polyolefin aus Polypropylen-Homo- und/oder Copolymeren, statistischen oder Block-Copolymeren, Polyethylen-Homo- und/oder Copolymeren ausgewählt ist.

17. Verfahren nach einem der Ansprüche 9 bis 16, wobei die wässrige Klebstoffzusammensetzung nach dem Auftragen auf die Substratoberfläche und dem Abdampfen des Wassers eine Dicke von 1 bis 60 µm hat.

18. Gegenstand, erhältlich durch das Verfahren nach einem der Ansprüche 8 bis 17.

## Revendications

1. Composition adhésive aqueuse comprenant
a) au moins une polyoléfine fonctionnalisée ;
b) au moins une résine réticulable ; et
c) au moins un agent de réticulation,
la résine réticulable étant sélectionnée parmi des résines époxydes et/ou acryliques et des résines qui peuvent être obtenues par réaction de mélamines, d'urée-benzoguanamine, de glycolurile ou de leurs mélanges avec du formaldéhyde.

2. Composition adhésive aqueuse selon la revendication 1 sélectionnée parmi le groupe constitué par des émulsions ou des suspensions.

3. Composition adhésive aqueuse selon l'une quelconque des revendications 1 ou 2, dans laquelle la polyoléfine fonctionnalisée est représentée par une polyoléfine contenant au moins un groupe fonctionnel sélectionné parmi le groupe hydroxyle, l'acide carboxylique, l'anhydride carboxylique, l'amine secondaire ou primaire, l'halogène, l'époxy et des combinaisons de ces groupes.

4. Composition adhésive aqueuse selon l'une quelconque des revendications 1 à 3, dans laquelle l'agent de réticulation est sélectionné dans le groupe constitué par des agents de réticulation d'aziridine ou des agents de réticulation à base d'isocyanate.

5. Composition adhésive aqueuse selon l'une quelconque des revendications 1 à 4, dans laquelle l'agent de réticulation est un agent de réticulation d'isocyanate bloqué par le caprolactame.

6. Utilisation d'une composition adhésive aqueuse comprenant
a) au moins une polyoléfine fonctionnalisée ;
b) au moins une résine réticulable ; et
c) au moins un agent de réticulation, pour lier un élastomère thermoplastique façonné à la surface d'un substrat polaire, la résine réticulable étant sélectionnée parmi des résines époxydes et/ou acryliques et des résines qui peuvent être obtenues par réaction de mélamines, d'urée-benzoguanamine, de glycolurile ou de leurs mélanges avec du formaldéhyde.

7. Utilisation selon la revendication 6, dans laquelle la surface du substrat polaire est prétraitée à l'aide d'une amorce avant l'application de la composition adhésive aqueuse.

8. Procédé permettant l'adhérence d'un élastomère thermoplastique sur un substrat polaire comprenant :
1) l'application d'une composition adhésive aqueuse telle qu'elle est définie dans l'une quelconque des revendications 1 à 5 sur ledit substrat polaire, et
2) l'application de l'élastomère thermoplastique sur la surface dudit substrat polaire traité.

9. Procédé selon la revendication 8, dans lequel l'élastomère thermoplastique est appliqué sur la surface du substrat par moulage par injection, par moulage par extrusion-soufflage, par stratification ou extrusion, de préférence par extrusion robotisée.

10. Procédé selon l'une quelconque des revendications 8 ou 9, dans lequel le substrat polaire est sélectionné dans le groupe constitué par des résines industrielles thermoplastiques polaires, des métaux, du bois, des textiles, des céramiques et du verre.

11. Procédé selon l'une quelconque des revendications 9 à 10, dans lequel la surface du substrat polaire est traitée à l'aide d'une amorce avant l'application de la composition adhésive aqueuse.

12. Procédé selon l'une quelconque des revendications 8 à 11, dans lequel la résine industrielle thermoplastique polaire est sélectionnée dans le groupe constitué par des polycarbonates, des copolymères acrylonitrile-butadiène-styrène, des polyamides et des polyesters.

13. Procédé selon la revendication 11, dans lequel l'amorce appliquée audit métal, audit verre enduit de céramique ou à ladite surface en verre est sélectionnée dans le groupe constitué par des aminosilanes, des mercaptosilanes, des époxysilanes et de leurs combinaisons.

14. Procédé selon l'une quelconque des revendications 8 à 13, dans lequel l'élastomère thermoplastique est sélectionné dans le groupe constitué par des copolymères séquencés styrène-éthylène-butylène-styrène, des copolymères séquencés styrène-butylène-styrène, des produits de vulcanisation thermoplastiques et de leurs combinaisons.

15. Procédé selon la revendication 14, dans lequel le produit de vulcanisation thermoplastique peut être obtenu en vulcanisant de façon dynamique un caoutchouc réticulable en présence d'une polyoléfine thermoplastique.

16. Procédé selon la revendication 15, dans lequel la polyoléfine thermoplastique est sélectionnée parmi des copolymères et/ou des homopolymères de polypropylène, des copolymères aléatoires ou séquencés, des copolymères et/ou des homopolymères de polyéthylène.

17. Procédé selon l'une quelconque des revendications 9 à 16, dans lequel la composition adhésive aqueuse présente une épaisseur allant de 1 à 60 µm, après application sur la surface du substrat et évaporation de l'eau.

18. Article pouvant être obtenu par le procédé selon l'une quelconque des revendications 8 à 17.
